# EUROPEAN PATENT SPECIFICATION

(11) **EP 2 438 709 B1**
(45) Date of publication and mention of the grant of the patent: **08.05.2013**
(21) Application number: 09779610.6
(22) Date of filing: 02.06.2009
(51) Int. Cl.: H04L 12/24

(54) **NETWORK ELEMENT INTEGRATION**
NETZELEMENTINTEGRATION
INTEGRATION D'ELEMENTS DE RESEAU

(43) Date of publication of application: 11.04.2012
(73) Proprietor: Nokia Siemens Networks Oy, 02610 Espoo (FI)
(72) Inventor: BAUERNFEIND, Siegfried, 81541 Munich (DE); SHANKAR, Ramesh, 560001 Bangalore (IN)
(86) International application number: PCT/EP2009/056756
(87) International publication number: WO 2010/139357

(56) References cited:
- EP-A- 1 898 553
- WO-A-00/51001
- WO-A-02/15480
- US-A- 5 594 792
- US-B1- 6 226 788
- US-B1- 6 389 464

## Description

The present invention relates to network element management and in particular to the flexible integration of Network Element Types with an Element Management System.

A telecommunication network comprises a number of Network Elements (NE), typically ranging from a few NEs to thousands of NEs depending on the size of the telecommunication network implemented by a network operator, that provide various functionality and services in the conventional telecommunication network. Different functionality and services are provided by different NE types, for example, the telecommunication network may include routers, multiplexers, base stations, cross-connects and so on. The NEs in a telecommunication network are typically managed by an Element Management System (EMS) and the overall telecommunication network is typically managed by a Network Management System (NMS).

The EMS comprises one or more servers that are operationally connected to the NEs in order to provide the capability to manage the NEs in the telecommunication network. The NMS is also a server, or again more typically a group of servers, that is hierarchically positioned above the EMS in order to provide network management functionality.

To enable the EMS to manage the different NE types the EMS is installed with a software release version that includes at least the definition of each of the different NE types along with the alarm definitions of each of the different NE types.

Accordingly, to enable the addition of new NE types to the telecommunication network the network operator has to request that the producer of the EMS software incorporates the support for the new NE type in the next EMS software version release. The producer of the EMS software will then develop, test and issue a new EMS software version release that incorporates the necessary data for the EMS to be able to support and manage the new NE type.

However, a problem with the process of developing, testing and installing new software releases for the EMS is that it has a long term life-cycle meaning there is no flexibility for the network operator to add new different NE types to their telecommunication network. In other words, the operator of a telecommunication network will have to wait a considerable amount of time, typically six to twelve months, for the new EMS software release to be developed, tested, approved and installed on the network operator's EMS.

Thus, in the conventional system the network operator has no flexibility in adding a new different NE type to their telecommunication network. For example, if the network operator wishes to add an additional new NE type to their network for a specific project then the network operator will have to wait a substantial period of time until a new EMS software release is developed, approved and installed before they can proceed with the project. This is clearly disadvantageous for the network operator.

Furthermore, in order to install a new EMS software release which includes the support for the new NE type the EMS system has to be taken out of service whilst the installation of the new EMS software release is performed. Thus, the telecommunication network will be interrupted and if an error occurs with the installation then there is a risk that a prolonged disruption to the telecommunication network will occur. Therefore, there is a need to enable a network operator to be able to flexibly add, effectively on an ad-hoc basis, new NE types to their telecommunication network and have the capability to manage those new NE types without having to wait a substantial period of time for a new EMS software release to be developed and installed.

US 6226788 B1 discloses a network management system for managing a plurality of network devices having a plurality of device types. Each network device is associated with a device type value, and each network device has an associated device mapper. The device mappers are stored in a hierarchical structure that reflects a functional relationship or family relationship of the devices. Functions to be carried out by one or more devices are expressed as a plurality of executable program components. Each device mapper associates a device type value with one or more overridden classes in the executable program component, and one or more over-riding classes. At runtime, device type values are acquired for each device in the managed network. For each device type, one or more functions are assembled using only the executable program components associated with that device type. Based on the device mapper of that device type, classes in the executable program components are over-ridden and the over-riding classes are substituted. As a result, at runtime the network management system integrates into itself executable program components for new devices.

According to a first aspect of the present invention there is provided a method for integrating a Network Element Type with an Element Management System comprising: retrieving a Network Element Type definition; retrieving a Network Element Type Alarm definition; integrating the Network Element Type definition with the Element Management System; and integrating the Network Element Type Alarm definition with the Element Management System such that the Element Management System can support the Network Element Type once the Network Element Type definition and the Network Element Type Alarm definition have been integrated with the Element Management System.

Thus, the present invention advantageously enables a Network Element Type to be integrated with the Element Management System in a substantially ad-hoc manner when a Network operator wishes to deploy the Network Element Type in their telecommunication network.

The method for integrating the Network Element Type with the Element Management System requires that the definition of the Network Element Type is retrieved along with the alarm definition of the Network Element Type. Both the definition and alarm definition are integrated with the Element Management System so that a network element of the Network Element Type that the network operator wishes to deploy in their telecommunication network can be supported. In other words, in order for the new Network Element Type to be supported, e.g. managed, the Element Management System has to be aware of the definition of the Network Element Type, e.g. for Configuration Management, and the alarm definition of the Network Element Type, e.g. for Fault Management. The method of the present invention therefore advantageously enables the Network Element Type to be integrated with the Element Management System without the need to develop, test, approve and install a new version of the Element Management System software in order to support the new Network Element Type.

The step of retrieving the Network Element Type definition may comprise retrieving the Network Element Type definition from a database or filesystem on the Element Management System or from a database operatively connected to the Element Management System. Thus, the definition of the Network Element Type may be stored on the Element Management System or on an external database from which the definition can be retrieved.

The Network Element Type definition may comprise a set of attributes and parameters that define the Network Element Type, wherein the step of integrating the Network Element Type with the Element Management System may comprise: generating Structure Query Language statements based on the Network Element Type definition where the definition may comprise specific attributes and parameters; and executing the Structured Query Language statements to integrate the attributes and parameters with the at least one database on the Element Management System. The method may also check that the Network Element Type definition is in a correct file format before generating the Structure Query Language statements.

Accordingly, the definition of the Network Element Type may be a file that includes the attributes and parameters that define the Network Element Type and the definition of the Network Element Type is integrated with the Element Management System by writing the attributes and parameters into the appropriate databases on the Element Management System. By enabling the attributes and parameters that define the Network Element Type to be written or integrated directly into the appropriate databases of the Element Management System then the Element Management System does not need to be taken offline or suffer any downtime when integrating the new Network Element Type with the Element Management System.

The Network Element Type definition may be an Extensible Markup Language (XML) file.

The method may further comprise: copying the Network Element Type definition to a directory on the Element Management System where the Network Element Type definition can be permanently stored. Thus, if necessary the Network Element Type can be re-integrated with the Element Management System, for example, after a system update of the Element Management System, as the definition of the Network Element Type is stored in a directory on the Element Management System that is not affected by any future system update.

The method may further comprise: updating a log file stored on the Element Management System with details of the integrated Network Element Type so that a log of the changes made to the Element Management System can be maintained.

The step of integrating the Network Element Type definition may comprise: checking that the Network Element Type does not exist in a database on the Element Management System. Therefore, in order to prevent the same Network Element Type being integrated with the Element Management System more than once the method may check that the Network Element Type to be integrated does not currently exist in the Element Management System.

The method may further comprise: creating an icon fileset for the Network Element Type in a database on the Element Management System by either renaming a default icon fileset wherein the default icon fileset is renamed based on the Network Element Type or adding a new specific icon fileset for the Network Element Type. In order for the network operator to view a graphical representation of their telecommunication network when performing monitoring and management functions the Network Element Type will preferably be assigned a set of icons. The icons for the Network Element Type may be a default set of icons that are used for all of the Network Element Types integrated with the Element Management System using the method of the present invention or a set of icons specific for the Network Element Type being integrated. If the default set of icons are to be used then a copy is made of the default icon fileset which is then renamed to include at least part of the name of the Network Element Type. If a new set of icons specific for the Network Element Type are to be used then they are written to the appropriate directory on the Element Management System and the filename of the new icons includes at least part of the name of the Network Element Type.

The method may further comprise: checking a licence exists that allows the network operator to use the functionality to integrate a Network Element Type with the Element Management System.

The method may further comprise: obtaining a copy of a menu configuration file from a directory on the Element Management System; updating the copy of the menu configuration file with details of the Network Element Type; and storing the updated copy of the menu configuration file in the directory on the Element Management System such that the updated menu configuration file can be uploaded to a computing device operatively connected to the Element Management System. Typically, staff in a network operator's control centre will use an external computing device, such as a UNIX or Windows based personal computer, to connect with the Element Management System in order to monitor the network, retrieve data from the network, view details of the network and so on. Accordingly, the menu configuration which defines the menu options that the staff using the external computing device may access will preferably be updated with details of the new Network Element Type which will be uploaded to their external computing device when the staff next log on to the Element Management System. Therefore, the staff using the external computing device will preferably be able to access the new Network Element Type from their external computing device.

The menu configuration file may be an Extensible Markup Language (XML) file and the details of the Network Element Type may comprise attributes that define a Web Graphical User Interface (GUI) for the Network Element Type. Thus, the staff can view a Web GUI for the Network Element Type that has been integrated with the Element Management System enabling the staff to access and interact with Network Elements of this Network Element Type.

The step of retrieving the Network Element Type Alarm definition may comprise retrieving a zip file, wherein the zip file comprises at least one file that define at least TRAP mappings data and alarm catalogue data; and the step of integrating the Network Element type Alarm definition with the Element Management System may comprises: extracting the at least one file from the zip file; updating the Element Management System according to data in the extracted at least one file.

As described hereinabove, the alarm definition of the Network Element Type has to be retrieved and integrated with the Element Management System so that the Element Management System can perform the necessary Fault Management of the Network Element Type. Preferably, the alarm definition for the Network Element Type includes at least one file, but more typically a set of files, which define the alarm handling and management for the Network Element Type. Therefore, the alarm definition is preferably provided as a single zip file in order to reduce the capacity required to store multiple alarm definitions corresponding to several Network Element Types and to package the data defining the alarm definition for each Network Element Type as a single zip file for ease of use.

The step of retrieving the Network Element TRAP Alarm definition may comprise retrieving at least one file that define at least TRAP mappings data and alarm catalogue data; and the step of integrating the Network Element Type Alarm definition with the Element Management System may comprise: updating the Element Management System according to the data in the retrieved at least one file. Alternatively, the data defining the alarm definition for the Network Element type may be defined by at least one, but typically several, individual files rather than as a single zip file.

In either of the above cases where the alarm definition is provided as a zip file or individual files, the alarm definition files preferably include TRAP mappings data and alarm catalogue data which when integrated with the Element Management System enable the Element Management System to perform Fault Management functionality.

The step of updating the Element Management System may comprise: installing the TRAP mappings data to a directory on the Element Management System; and installing the alarm catalogue data to a directory on the Element Management System. The alarm definition of the Network Element Type may be integrated with the Element Management System by extracting the alarm definition files to the appropriate directories on the Element Management System and adding the necessary data to the appropriate databases on the Element Management System.

The method may further comprise: generating the Network Element Type Alarm definition; and storing the Network Element Type Alarm definition in a directory on the Element Management System. The step of generating the Network Element Type Alarm definition may comprise: retrieving Management Information Base file; generating Comma Separated Value file based on the Management Information Base file; editing the Comma Separated Value file to include values for the Network Element Type; generating a TRAP mapping data file based on the edited Comma Separated Value file; and generating at least one alarm catalogue file based on the edited Comma Separated Value file.

The alarm definition that is retrieved for each Network Element Type has been pre-generated and stored in a database or in a directory that are either on the Element Management System or on a computing device operatively connected to the Element Management System. The TRAP mapping file used by the Element Management System for Fault Management may be generated based on at least one Management Information Base file where the Management Information Base file is used to generate a Comma Separated Value file which is in turn used to generate the TRAP mapping file. Preferably, the resulting files that together form the alarm definition of the Network Element Type are compressed into a single zip file and stored in a directory on the Element Management System.

The step of generating the Network Element Type Alarm definition may be performed on the Element Management System or may be performed on a computing device operatively connected to the Element Management System. Preferably, the alarm definition for the Network Element Type is generated on a computing device and transferred to the Element Management System for when the Network Element Type is to be integrated with the Element Management System. However, the alarm definition may be generated on the Element Management System.

The method may further comprise: checking the Network Element Type Alarm definition exists on the Element Management System. In order to integrate the Network Element Type with the Element Management System it should be available to be retrieved so that the Network Element Type can be successfully integrated and therefore the method may check that the alarm definition exists before proceeding to integrate the Network Element Type with the Element Management System.

According to a second aspect of the present invention there is provided a server adapted to: retrieve a Network Element Type definition; retrieve a Network Element Type Alarm definition; integrate the Network Element Type definition with the Element Management System; and integrate the Network Element Type Alarm definition with the Element Management System such that the Element Management System can support the Network Element Type once the Network Element Type definition and the Network Element Type Alarm definition have been integrated with the Element Management System.

The Network Element Type definition may comprise a set of attributes and parameters that define the Network Element Type, wherein the server is further adapted to: check the Network Element Type definition is in a correct file format; generate Structure Query Language statements based on the Network Element Type definition; and execute the Structured Query Language statements to integrate the attributes and parameters that define the Network Element Type into at least one database on the Element Management System.

The Network Element Type Alarm definition is a zip file, wherein the zip file comprises at least one file that define at least TRAP mappings data and alarm catalogue data; and the server is further adapted to: extract the at least one file from the zip file; update the Element Management System according to data in the extracted at least one file.

The server may be further adapted to: install the TRAP mappings data to a directory on the Element Management System; and install the alarm catalogue data to a directory on the Element Management System. The server may also be adapted to perform all steps of the method of the invention described herein.

A skilled person in the art will appreciate that the server may be adapted by installing the appropriate and corresponding computer readable executable code that enables the server to perform the required functions.

According to a third aspect of the present invention there is provided a computer program product comprising computer readable executable code for: retrieving a Network Element Type definition; retrieving a Network Element Type Alarm definition; integrating the Network Element Type definition with the Element Management System; and integrating the Network Element Type Alarm definition with the Element Management System such that the Element Management System can support the Network Element Type once the Network Element Type definition and the Network Element Type Alarm definition have been integrated with the Element Management System.

The Network Element Type definition may comprise a set of attributes and parameters that define the Network Element Type, wherein the computer program product further comprises computer readable executable code for: checking the Network Element Type definition is in a correct file format; generating Structure Query Language statements based on the Network Element Type definition; and executing the Structured Query Language statements to integrate the attributes and parameters that define the Network Element Type into at least one database on the Element Management System.

The Network Element Type Alarm definition may be a zip file, wherein the zip file comprises at least one file that define at least TRAP mappings data and alarm catalogue data; and the computer program product further comprises computer readable executable code for: extracting the at least one file from the zip file; updating the Element Management System according to data in the extracted at least one file.

The computer program product may further comprise computer readable executable code for: installing the TRAP mappings data to a directory on the Element Management System; and installing the alarm catalogue data to a directory on the Element Management System.

According to a fourth aspect of the present invention there is provided a method for removing a Network Element Type from an Element Management System comprising: checking if any Network Element Type instances exist on the Element Management System; and if no Network Element Type instances exist removing attributes and parameters defining the Network Element Type from at least one database on the Element Management System.

According to a fifth aspect of the present invention there is provided a server adapted to: check if any Network Element Type instances exist on an Element Management System; and if no Network Element Type instances exist remove attributes and parameters defining the Network Element Type from at least one database on the Element Management System.

According to a sixth aspect of the present invention there is provided a computer program product comprising computer readable executable code for: checking if any Network Element Type instances exist on an Element Management System; and if no Network Element Type instances exist removing attributes and parameters defining the Network Element Type from at least one database on the Element Management System.

Accordingly, in an embodiment a Network Element Type can be removed from the Element Management System by removing the definition of the Network Element Type from the Element Management System. The menu configuration file may also be updated to remove the data relating to the Network Element Type, the icons for the Network Element Type may also be removed and the alarm definition (e.g. the TRAP mapping file and the alarm catalogue files) may also be removed from the Element Management System.

Embodiments of the present invention will now be described, by way of example only, and with reference to the accompanying drawings, in which:
Figure 1 shows a schematic diagram of a typical telecommunication network.
Figure 2 shows a schematic diagram of the architecture of the present invention in accordance with aspects of the invention.
Figure 3 shows a message flow diagram for integrating a new NE type to an Element Management System in accordance with aspects of the invention.
Figure 4 shows a message flow diagram for re-integrating the NE types after a system update in accordance with aspects of the invention.
Figure 5 shows a message flow diagram for deleting a NE type from the Element Management System in accordance with aspects of the invention.

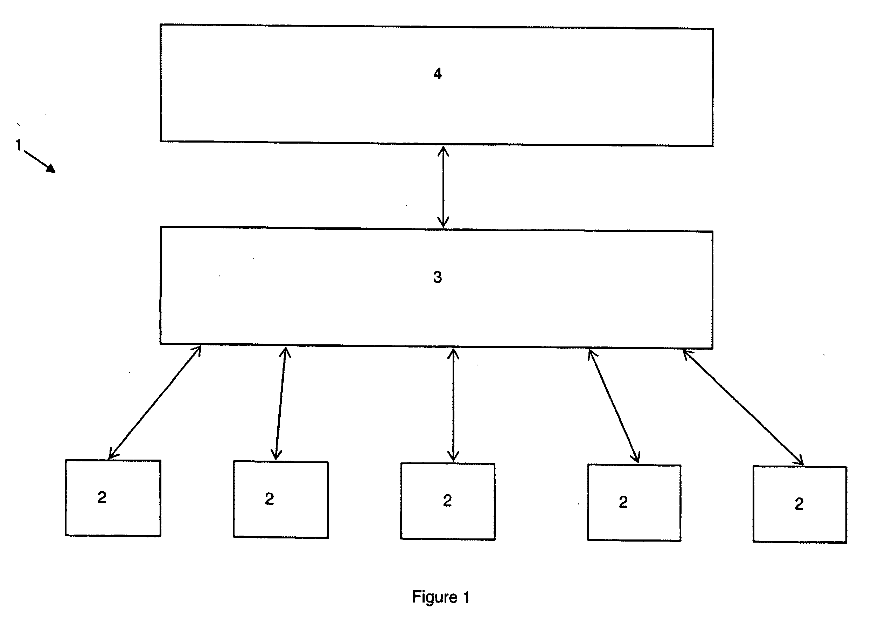

Figure 1 shows a schematic diagram of a typical telecommunication network 1 implemented by a network operator. A typical telecommunication network 1 comprises a plurality of Network Elements (NE) 2, typically in the range of hundreds if not thousands of NEs 2, which provide the functionality and services in the telecommunication network 1. There are numerous different types of available NEs 2, for example, routers, base stations, multiplexers and so on, each of which provides different functionality and services.

The NEs 2 are typically managed by an Element Management System (EMS) 3, which may comprise one or more servers. The EMS 3 typically manages the functions and capabilities within each NE 2 which includes, for example, fault management, configuration management, performance management and so on. In order to manage the telecommunication network overall, including, for example, the management of the traffic between the NEs, the EMS communicates with a Network Management System (NMS) 4 which sits in a hierarchically higher level to the EMS 3. The NMS 4 also typically comprise one or more servers and provides the functionality to manage the overall telecommunication network 1.

In order for the EMS 3 to be able to manage the different NE types that are present in the telecommunication network 1 the NE type's definition and alarm definition have to be integrated with the EMS 3. As described hereinabove, this is conventionally achieved by developing and installing an EMS software release version on the EMS 3 that includes the required information.

Accordingly, if a network operator wished to deploy a new NE type which is not currently supported by the EMS 3 then the network operator would conventionally have to submit a change request to the EMS software provider for the new NE type to be incorporated into and supported by the EMS 3. The EMS software provider would then incorporate the requested new NE type into the next release of the EMS software which typically would have a life-cycle of six to twelve months. Therefore, the network operator will have to wait a substantial period of time before they can use the new NE type that they require for a particular project or to provide particular functionality in their telecommunication network 1. This process is clearly disadvantageous for the network operator as there is no flexibility in making new additions to their telecommunication network. Moreover, once the new EMS software release has been approved for release and installation on the EMS 3 then in order to install the new EMS software release the EMS has to be taken out of service for the software to be installed which will cause disruption in the network. Thus, if there are any problems with the installation of the new EMS software release then a prolonged period of network disruption may occur as the EMS 3 will be offline for the prolonged period.

Accordingly, there is a need for methods and apparatus that will enable a network operator to integrate new NE types into their telecommunication network 1 in a substantially ad-hoc manner without needing to wait for a new EMS software release to be developed, approved and installed.

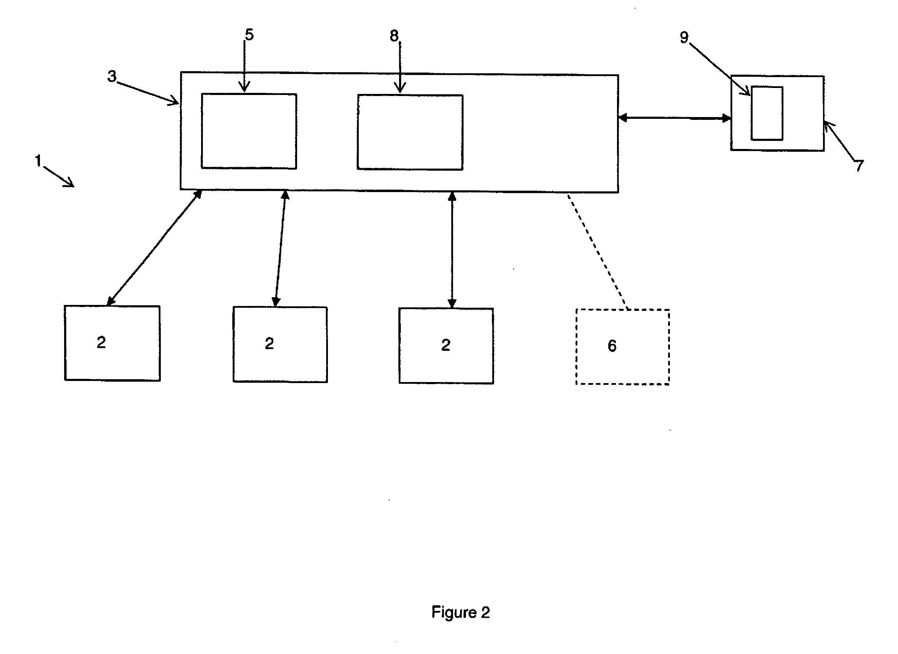

In the embodiments of the present invention, and with reference to Figure 2, there is provided a NE type integration toolkit 5 that provides the functionality to integrate new NE types 6 into the EMS 3 as and when required by the network operator. The NE type integration toolkit 5 in the embodiments is implemented as a command line tool on the EMS 3 which may be a Java application command line tool.

In order to integrate a new NE type 6 into the EMS 3, so that the new NE type can be deployed and used by the network operator in a substantially ad-hoc manner, the NE type integration toolkit 5 performs several functions that enable the new NE type 6 definitions to be integrated with the current EMS 3 without needing to wait for a new EMS software release to be developed, tested and installed. Moreover, the NE type integration toolkit 5 of the embodiments can be used to integrate the new NE type 6 whilst the EMS 3 is operating and therefore the EMS 3 does not have to be taken offline as is the case when a new EMS software release version is installed. Accordingly, during the integration of new NE type 6 into the EMS 3 the performance, operation, the expected use of system resources or capacities of the EMS 3 will advantageously not be affected.

In the embodiments of the present invention, in order to integrate the new NE type into the EMS 3 then the EMS 3 has to be provided with the NE type's definition data and, for Fault Management, the alarm definition data of the NE type. The NE type integration toolkit 5 may also perform a licence check, to ensure the necessary licence is available permitting the network operator to add new NE types 6 at runtime, provision and generation of the alarm definition files including, for example, TRAP mapping and catalogue files, the installation of icons and the update menu configurations on the EMS 3.

The NE type integration toolkit 5 controls the procedure of integrating a new NE type 6 and is invoked on the EMS 3 preferably via a Java command line tool.

The NE type integration toolkit 5 requires two main components in order to be able to integrate the new NE type 6 with the EMS 3. The first component is a definition of the new NE type to be added where the definition of the NE type is preferably in the form of an Extensible Markup Language (XML) file. The second main component required by the NE type integration toolkit 5 is the alarm definition which preferably includes alarm catalogue files and TRAP mapping files for the new NE type 6.

The definition of the NE type is preferably generated as an XML file and is stored in a database on the EMS 3 or in a database that is operatively connected to the EMS 3. The XML file contains various pieces of data that define the NE type 6 in the form of parameters and attributes which when integrated with the EMS 3 enable the EMS 3 to manage, support and identify the new NE type 6. A template for a typical XML file according to an embodiment of the present invention is given below, where placeholders marked with "$..." are to be replaced by the real values associated with the new NE type 6.

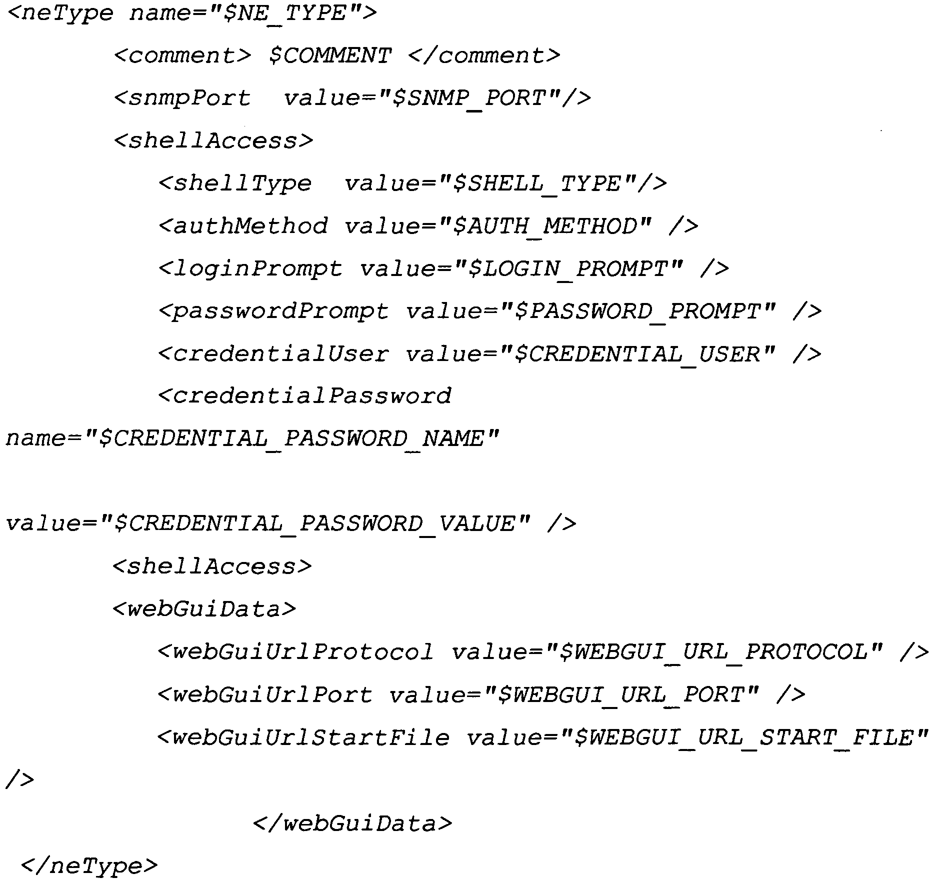

The XML files for the new NE types are stored in a database that is operatively connected to the EMS which enables the NE type integration toolkit 5 to locate and/or retrieve the definition file when the NE type 6 is being integrated with the EMS 3.

In addition to the above described attributes and parameters the XML file may also comprise several further features, attributes and parameters that define the NE type. These additional attributes and parameters shown below are provided with standardised values that are automatically added to the set of attributes for a new NE type.

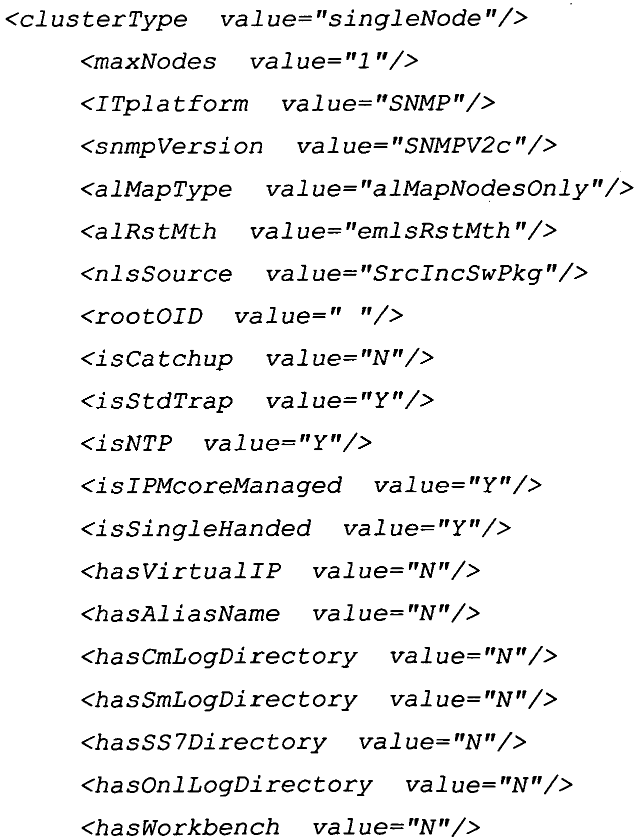

The definition file for the new NE type 6 may also contain an attribute *<productLine value="OEM"*/*>* which enables the NE types integrated using the NE type integration toolkit 5 to be grouped according to product lines. The definition file may also contain an attribute *<asynclntegratedType value="true"*/*>* that identifies the NE type 6 as one which has been integrated with the EMS 3 using the NE type integration toolkit 5.

The NE type integration toolkit 5 is used to integrate the new NE type 6 into the EMS 3 whilst the EMS 3 is operational and whenever the network operator wishes to deploy the new NE type 6 within their telecommunication network 1. The NE type integration toolkit 5 locates the relevant definition of the NE type 6, which is preferably in the form of an XML file, from the database, or more typically from a local filesystem that stores the NE type definition files. The NE type integration toolkit 5 checks the XML file against a corresponding XML Schema Definition (XSD) to determine that the XML file is in the correct format. If the XML file is in the proper format the NE type integration toolkit generates Structured Query Language (SQL) statements based on the parameters, features and attributes given in the XML file.

The EMS 3 preferably comprises one or more databases 8 that contain various pieces of information and data that enable the EMS 3 to function and manage the NEs 2 in the telecommunication network 1. One or more of these databases may comprise a Local Configuration Management (LCM) tablespace which includes the various configuration details of the NE types that the EMS 3 supports and can manage. The tablespace may include, for example, a "neFeatures" table which stores for each NE type a set of feature attributes and parameters that may be used to determine a unique profile for all NE instances of the same NE type. The tablespace may also include, for example, a "neTypeCredentials" table which stores the credentials per NE type. The tablespace may further include, for example, a "neTypeWebGui" table for storing data for launching a Web GUI (Graphical User Interface) for the NE type if the NE type supports one or more Web GUIs.

After the NE type integration toolkit 5 has generated the SQL statements based on the XML definition file it establishes a connection to the database 8 on the EMS 3 that includes the LCM tablespace. Preferably, the connection to the database is via Java Database Connectivity (JDBC). The SQL statements are executed so that all of the new NE type's features, attributes and parameters are integrated with the LCM database tables. In order to preserve the integration of the new NE type after future EMS software release version upgrades the XML file describing the definition of the new NE type 6 is also copied to a directory on the EMS 3 which is not affected by any system update of the EMS 3. This stored definition file will enable the NE type to be re-integrated with the EMS 3 after any such system update, for example, the installation of a new EMS software release version, as will be described further below.

As data is retrieved from the LCM database dynamically by the EMS 3 then there is no need to reboot or restart the EMS in order for the EMS 3 to be able to support and manage the new NE type 6 being integrated with the EMS 3. Thus, the definition of the new NE type may advantageously be integrated with the EMS 3 without any downtime of the EMS 3.

As mentioned above, the NE type integration toolkit 5 also needs to integrate the alarm definitions, which preferably include pregenerated alarm catalogues and TRAP mapping files for the new NE type 6, into the EMS 3 so that the EMS 3 is able to perform Fault Management for the new NE type when it is operational in the network operator's telecommunication network 1. For example, in Fault Management the EMS 3 must be able to process incoming alarms and events from NE type instances 6.

Fault Management in the conventional telecommunication network 1 is typically performed using the known Simple Network Management Protocol (SNMP). Therefore, in order for the EMS to perform Fault Management the alarm TRAP mapping and catalogue files for the new NE type 6 also need to be integrated with the EMS 3.

In SNMP a TRAP is used by the NE to report an alarm or event that has occurred in the NE to the management systems. As a person skilled in the art will be aware, the TRAP may also simply known as a notification in some versions of SNMP and accordingly any reference to TRAP also refers to the notifications depending on the version of SNMP being implemented. The TRAP mappings file is preferably an XML file that contains information which enables the incoming alarms and events from the NE type to be converted into the known X.733 format and enable the EMS 3 to receive and store the events and alarms in an Event database on the EMS 3 via an Event Manager. Accordingly, a TRAP mapping file needs to be specified for each new NE type to enable the EMS 3 to manage the NE type 6.

The alarm catalogue files contain the alarm catalogue information for the new NE type 6 being integrated with the EMS 3. In the embodiments the alarm catalogue files comprise five files of which three are binary National Language Support (NLS) comprising message strings that include information regarding a particular TRAP and two are secondary text files containing alarm reset information. Thus, the alarm catalogue files may include alarm description content such as Long text, Repair text, Short text and Alarm text which can be displayed in an Event Information Graphical User Interface (GUI) alongside the corresponding raised alarm

The alarm definition zip file for the new NE type 6 is preferably transferred into an arbitrary directory on an EMS server. The zip file may be transferred to the EMS 3 from a database at the time of integrating the new NE type 6 or the zip file may be transferred to the EMS 3 prior to the integration of the new NE type 6. The zip file may be generated in advance of the integration of the new NE type 6 either on the EMS server or on a computing device 7 such as a computer that is external to the EMS 3. As a person skilled in the art will appreciate the alarm files generated do not need to be compressed into a zip file but it is preferable in order to reduce the resources needed to store the generated alarm files for each NE type 6 that may be integrated with the EMS 3.

The NE type integration toolkit 5 locates and/or retrieves an alarm definition zip file, which preferably includes a pre-generated TRAP mappings file and a pregenerated alarm catalogue files, for the new NE type 6 being integrated with the EMS 3.

During the integration of the new NE type 6 the NE type integration toolkit 5 unpacks the zip file containing the various alarm definition files that will enable the EMS 3 to perform Fault Management for the new NE type 6. The NE type integration toolkit 5 executes a shell script using, for example, the command deploy.sh which performs the integration of the alarm definition files into the EMS 3. For example, the TRAP mappings XML files are copied to an installation directory on the EMS 3, the alarm event catalogue files are extracted to the necessary directories on the EMS 3, the NLS alarm catalogue files are generated in the correct directory on the EMS 3 and the event ID properties file on the EMS 3 is updated with details of the new NE type 6. The directories in which the alarm definition files are integrated will preferably not be affected by a system update of the EMS 3 and therefore are present if and when the NE type needs to be re-integrated with the EMS 3. Alternatively, the alarm definition files may be copied to another directory on the EMS 3 which is not affected by a system update and can be retrieved and re-integrated with the EMS 3.

In the embodiments, it is preferable to use XML files for the TRAP mappings file of the new NE type 6 to be integrated as they provide the flexibility to update the mapping details at run time and therefore advantageously do not require the EMS 3 to be taken offline during the integration of the new NE type 6.

Accordingly, in this embodiment a new NE type 6 can be integrated with the EMS 3 whilst the EMS 3 is operational and without needing to wait for a new software release version for the EMS 3 to be developed, approved and installed before the new NE type 6 can be supported by the EMS 3. The NE type integration toolkit 5 of these embodiments integrates the definition files and alarm files of the new NE type 6 into the EMS 3.

As described above, in order to integrate the new NE type 6 into the EMS 3, an alarm zip file for the new NE type 6 is used to integrate the Fault Management (FM) handling for the new NE type 6 into the EMS 3. In further embodiments of the present invention the alarm zip file for the new NE type 6 is generated using an FMToolkit 9 which may be part of the NE Type Integration Toolkit 5. The alarm zip file may be generated prior to or at the time of integration of the new NE type 6 into the EMS 3. The alarm zip file may be generated on the EMS 3 but more preferably the alarm files are generated on an external computing device 7 and the alarm zip file transferred to the EMS 3 for when the new NE type 6 is to be integrated with the EMS 3.

The FMToolkit 9 uses SNMP Management Information Base (MIB) files for the new NE type 6 where the MIB files typically comprise objects that are used to manage the NE types 6 in a telecommunication network 1. The FMToolkit 9 generates a Comma Separated Value (CSV) file based on the MIB files for the new NE type 6 by, for example, executing the FMToolkit 9 script with a "-gc" option. The CSV file generated from the MIB files may then be manually edited in order to include the actual values for various X.733 attributes which can be used for mapping SNMP TRAPs to X.733 objects. X.733 is a well known ITU standard that defines Alarm Reporting functions in a telecommunication network.

The FMToolkit 9 may then generate the TRAP mapping XML files and the alarm catalogue files based on the updated CSV file by, for example, executing the FMToolkit script with a "-gx" option.

The result of the FMToolkit 9 is a zip file that contains the TRAP mapping files and the other alarm files, e.g. the catalogue files, required by the EMS 3 when the new NE type 6 is integrated with the EMS 3. As discussed hereinabove, the generated alarm zip file is transferred to the EMS 3 for when the NE type integration toolkit 5 is executed in order to integrate the alarm handling capabilities for the new NE type 6 into the EMS 3.

In further embodiments the NE type integration toolkit 5 may perform several further functions and processes when integrating a new NE type 6 into the EMS 3. For example, the NE type integration toolkit 5 may check that the network operator has a licence to add new NE types 6, the NE type integration toolkit 5 may install icons on the EMS 3 for the new NE type 6 and the NE type integration toolkit 5 may update the menu configuration on the EMS client 7 to include the new NE type 6.

In order for a network operator to integrate new NE types 6 in their telecommunication network, the network operator needs to obtain a licence to allow them to do this. Therefore, the NE type integration toolkit 5 may perform a licence check via a licencing application program interface (API) to ensure that the network operator is allowed to integrate a new NE type 6 into their telecommunication network 1. The NE type integration toolkit 5 checks whether a licence for using the toolkit is available and if a licence is not available then an error is raised by the function checking for a valid active licence and the process of integrating the new NE type 6 is stopped.

When a new NE type 6 is integrated with the EMS 3 it should preferably be represented by an icon in the graphical representation of the network available to the network operator via a graphical user interface (GUI) in their control centre. Therefore, an icon fileset should be available for each NE type in order for the instances of each NE type deployed in the telecommunication network to be represented on the GUI. Accordingly, when the NE type integration toolkit 5 integrates the new NE type 6 with the EMS 3 it may also install an icon fileset, which comprises a set of gif files, that enables the new NE type 6 to be represented graphically.

The new NE types 6 integrated with the EMS 3 may be represented by a set of default icons stored in a default icon fileset. In order to provide the icon fileset for the new NE type 6 the NE type integration toolkit 5 preferably copies the default icon fileset into the appropriate directory, for example, the $TI_FSPOOL directory, on the EMS 3 and renames the icon fileset based on the name of the new NE type. In order for the icons to be used the NE type is also added to the appropriate database table, for example, the database table FileServerPool, by writing an entry in the database table.

Alternatively, each new NE type 6 may have its own icons which may be copied to the appropriate directory on the EMS and written to the appropriate database table in a similar manner to the process described above for providing the default icon fileset.

It is preferable that the EMS client 7 configuration is updated to include the new NE type 6 when the new NE type 6 is integrated with the EMS 3. The EMS clients 7 are typically computing devices, such as a Unix or Windows based computer, that allow human operators to access data from and interact with the EMS 3 and the NE types supported and managed by the EMS 3. Therefore, once the new NE type 6 is integrated with the EMS 3, the EMS client 7 configuration may also be updated so that menu items presented to the human operator will include options for the new NE type 6.

Accordingly, the NE type integration toolkit 5 may further perform the function of updating the menu configuration on the EMS server so that the updated menu configuration is then available to be uploaded to the EMS clients 7 when the EMS clients 7 next log in to the EMS 3.

Typically, the EMS 3 will have web server capabilities and functionality through which the EMS clients 7 interface with the EMS 3. Preferably, a XML file is used to define the menu configuration details which includes, for example, tags for enabling a Web GUI to be activated on the EMS clients 7 for each of the NE types 6. The NE type integration toolkit 5 obtains a static copy of the XML menu configuration file from the appropriate directory on the EMS 3 in which the XML menu configuration file is located. The static copy of the XML menu configuration file is then amended to include the attributes and parameters of the new NE type 6 being integrated with the EMS 3.

For example, the copied static XML menu configuration file is amended by first locating an <action> tag with the ID 'configuration.localAdmin' which defines the local administration menu. The content of the <action> tag may then be amended to include a new <context> tag which contains the identifiers and attributes required to define the Web GUI for the new NE type. For example, the new <context> tag may include identifiers and attributes that identify the NE type, details of the Web GUI of the new NE type, the location in the LCM from which any further data for the Web GUI may be obtained and so on. An example of the amended part of the XML configuration file is shown below.

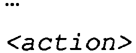

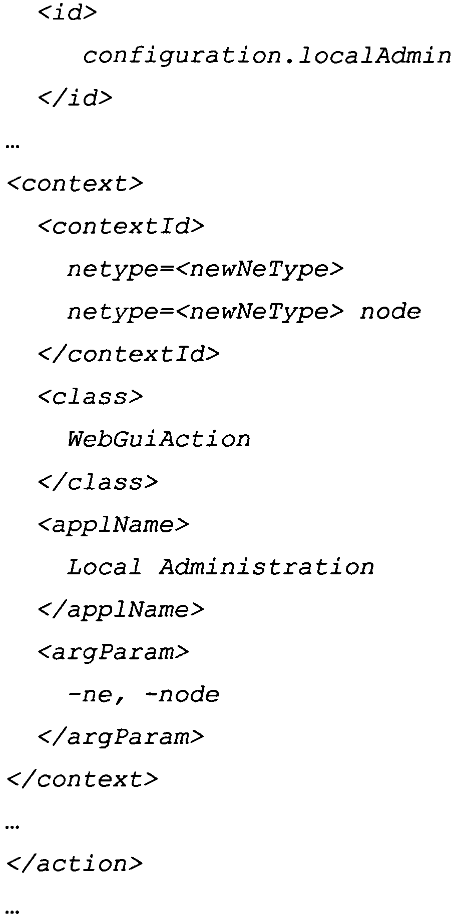

The XML menu configuration file is then saved in the appropriate directory on the EMS 3 so that when a user of the EMS client 7 next logs in to the EMS 3 the new menu is loaded based on the amended XML menu configuration file. Therefore, the user of the EMS client 7 will be able to access and interact with the Web GUI for the new NE type 6 that has been integrated with the EMS 3.

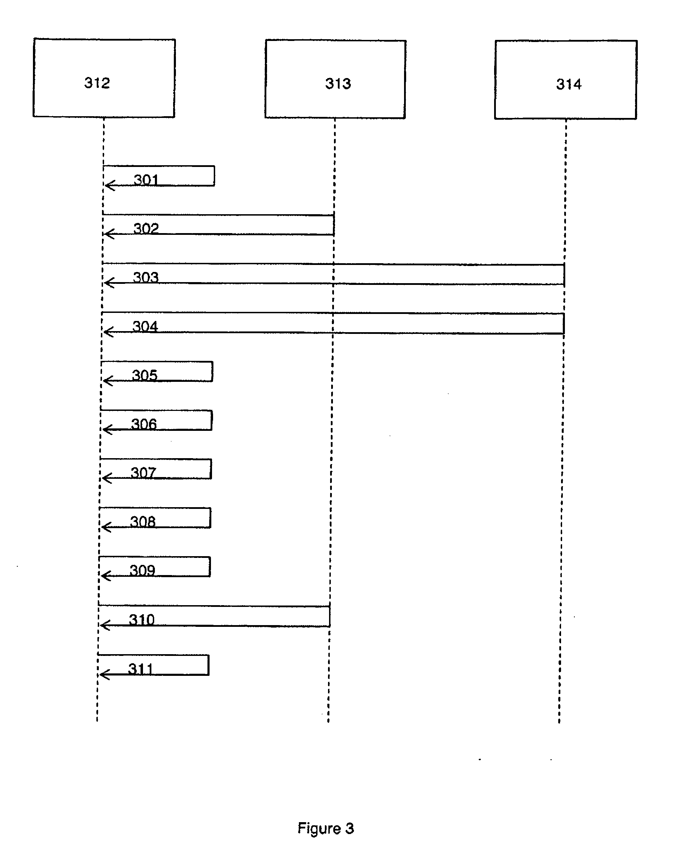

As described hereinabove, the NE type integration toolkit 5 may perform several functions when integrating a new NE type 6 into the EMS 3. Accordingly, taking the example of the NE type integration toolkit 5 performing all of the functions (though as a person skilled in the art will appreciate not all of the functions need to be performed in order to integrate a new NE type 6 into the EMS 3) then in one embodiment the process and message flows will be described with reference to Figure 3.

In this embodiment, the NE type integration toolkit 312 is invoked and it performs a series of steps in order to integrate the new NE type into the EMS. In step 301, a check is made for a valid active licence that allows the network operator to perform the steps to integrate a new NE type with the EMS. If a licence is active then in step 302 a check of the database 313 on the EMS is made to ensure that the NE type does not already exist in the EMS. If the NE type does not already exist in the EMS then in step 303 the NE type's XML definition file is located and obtained from the database 314 in which the XML definition file is stored. The NE type's XML definition file is verified and in step 304 an appropriate shell access XML file is generated. A shell access XML file may be generated in order to automate logging into an instance of the NE type deployed in the telecommunication network. Accordingly, the NE type definition file may also comprise credential data, for example, login account details, password and so on, which are required to log in to the a network element of that NE type (i.e. an instance of the NE type) when it is deployed in the telecommunication network. Thus, a user at the network operator's control centre may automatically log in to the instance of the NE type by invoking the generated shell access XML file.

In steps 305 and 306 the existence of valid alarm TRAP mapping and catalogue files for the NE type is checked. If these checks are successful then in step 307 the NE type icon fileset is created, in step 308 the NE type definition file and generated shell access file are stored in a directory on the EMS which is not affected by any future system update and in step 309 the menu configuration file for the EMS clients is updated with the new NE type entry. In step 310 the new NE type is then integrated with the EMS databases 313 and in step 311 the change in the NE type configuration is logged in a log file on the EMS.

As described hereinabove, when a new NE type is integrated with the EMS using the NE type integration toolkit a copy of the XML configuration file and the alarm definition files, e.g. the TRAP mapping and catalogue files, are saved in the appropriate directories on the EMS which are not affected by any system update of the EMS. Therefore, if a new EMS software version is installed on the EMS or any other form of system update including, for example, whenever a new customised package is installed on the EMS, the new NE types installed between system updates can automatically be re-integrated and re-deployed back into the EMS. The re-integration of the NE types may be necessary if, for example, the system update is a new EMS software release version which does not include the support for the NE type that the network operator has deployed in their telecommunication network. In this case, the NE types will be re-integrated with the EMS to ensure that the NE types are continued to be supported by the EMS enabling the network operator to continue to use and deploy those NE types into their telecommunication networks.

The XML definition file and the alarm definition files of the NE types that have already been integrated with the EMS are saved in a directory on the EMS file system which is not affected during any form of system update and therefore no loss of the configuration data for the integration of NE types that were performed between system updates will occur.

As the NE types were integrated with the EMS prior to any system or software update then it is not necessary to check that a valid active licence exists as this check would have been performed when the NE type was integrated with the EMS the first time.

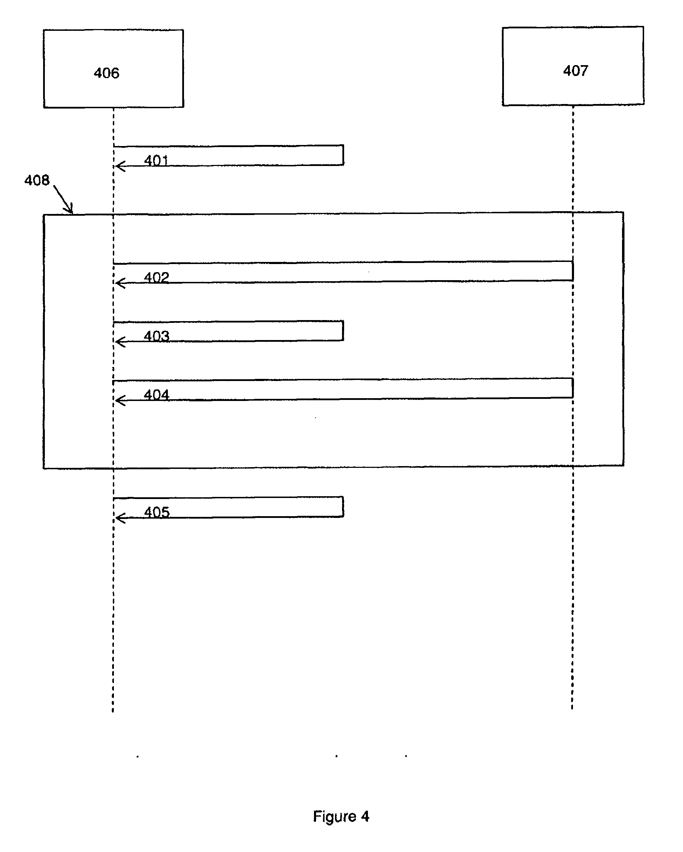

The re-integration of the NE types into the EMS using the NE type integration toolkit 406 will now be described with reference to Figure 4. In step 401 all of the XML definition files are located in the directory on the EMS in which the XML definition files were saved. A loop 408 is then entered in which each of the XML definition files located will be checked that they should be re-integrated with the EMS and, if so, re-integrated. In step 402 the NE type integration toolkit checks whether the NE type corresponding to the XML definition file being considered already exists in the EMS database 407. The NE type may already exist if, for example, the system update was the installation of a new EMS software version that incorporated support for the NE type.

If the NE type corresponding to the XML configuration file does not exist then in step 403 the NE type integration toolkit checks that the necessary alarm definition files for the NE type are available. As described hereinabove, when the new NE type was originally integrated for the first time into the EMS, the alarm files, either the alarm zip file or the extracted alarm files were either copied to a directory on the EMS which is also not affected by a system update or the directories in which the alarm definition files were integrated which are not affected by a system update. Accordingly, if both of the XML configuration files and the alarm files for the NE type are available then the NE type can be re-integrated with the EMS. Effectively, a similar procedure and process is performed by the NE type integration toolkit as described above in terms of integrating the NE type into the EMS for the first time albeit only some of the processes are preferably required. Accordingly, in step 404 the icon fileset is updated with the re-integrated NE type's icons and in step 405 the NE type is integrated with the appropriate databases 407 in the EMS. The alarm definition files should not need to be re-intrgrated as they were originally integrated with directories and databases that should not be affected by a system update. However, as will be appreciated, if for any reason the alarm definition files do require re-integration then the same procedure as described hereinabove may be followed to perform the re-integration of the alarm definition files.

Once all of the XML definition files stored on the EMS have been re-integrated with the EMS then in step 406 the menu configuration file is updated with details of all of the NE types that have been re-integrated with the EMS so that the EMS clients can access the Web GUI for each of the re-integrated NE types.

In order to manage the NE types that can be added via the NE type integration toolkit then it is preferable that the NE type integration toolkit may also be used to delete the NE types that have been integrated with the EMS via the NE type integration toolkit.

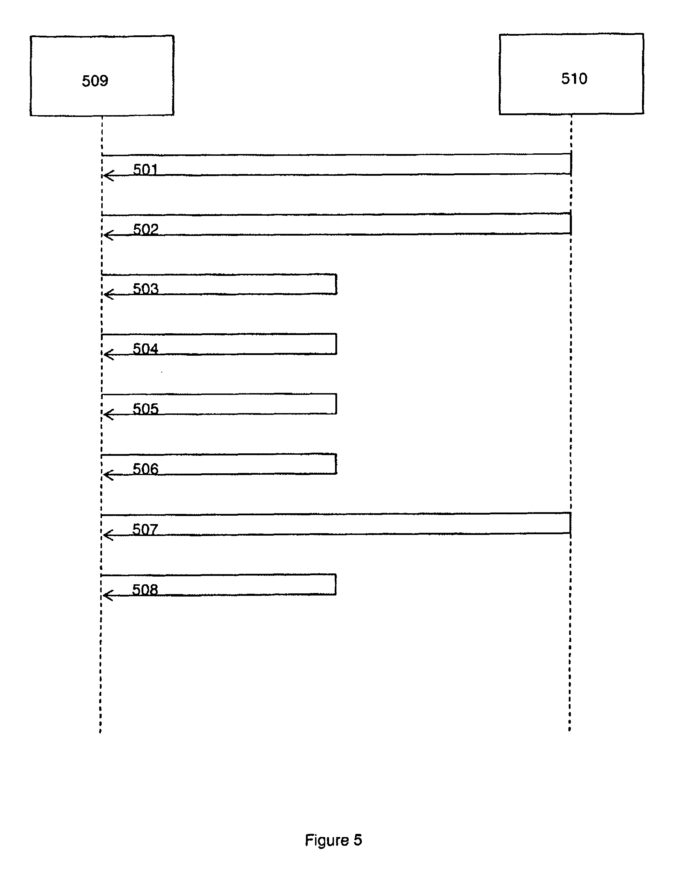

The process of deleting the NE types from the EMS will now be described with reference to Figure 5. The NE type integration toolkit 509 is invoked with a 'delete' option, including the name of NE type that shall be deleted from the EMS. In step 501 the NE type integration toolkit checks that the NE type to be deleted exists in the EMS database 510. In step 502 the NE type integration toolkit 509 then checks as to whether there are any NE instances related to the NE type to be deleted also exist in the EMS database 510. In other words, the NE type integration toolkit checks whether actual network elements of the NE type (i.e. instances of the NE type) are currently actively deployed in the telecommunication network by checking if any instances of the NE type exist in the EMS database. If any NE instances related to the NE type exist in the EMS database then the NE type cannot be deleted and the deletion process is stopped. However, if no NE instances related to the NE type exists then the NE type can be deleted from the EMS.

Accordingly, in step 503 the icon fileset for the NE type is removed from the EMS file system. For example, the entries for the NE type's icon gif-files will be removed from database table 'FileServerPool' and the NE type icon fileset will be deleted in $TI_FSPOOL file system. In step 504 the definition file of the NE type being deleted is removed from the EMS filesystem. In step 505 the shell access files are also removed from the EMS.

In step 506 the NE type integration toolkit may also amend the menu configuration file in order to remove the tags, parameters and attributes associated with the NE type are from the XML menu configuration file. Therefore, the operator using the EMS clients to access the EMS will no longer be able to access, for example, the Web GUI of the deleted NE type.

In step 507 the NE type integration toolkit removes the definition data from the EMS database 510. In order to delete the NE type from the EMS all information of the NE type needs to be deleted from the databases on the EMS. For example, feature attributes of the NE type will be removed from the database table 'neFeatures', credentials will be removed from the database table 'neTypeCredentials' and WEB GUI entries will be removed from database table 'neTypeWebGui'.

If the deletion of the NE type is successful then in step 508 a configuration change log record will be written to the EMS log file.

The NE type integration toolkit may also delete the corresponding alarm mapping and catalogue files for the NE type from the appropriate databases and directories on the EMS using, for example, a shell script 'undeploy.sh' invoked with parameter NE type name being deleted.

The preferred embodiments of the present invention enable a new NE type to be integrated with the EMS in a substantially ad-hoc manner and without any downtime of the EMS. This is particularly advantageous as a network operator can deploy new NE types into their telecommunication network without having to wait for a new EMS software release version incorporating the support for the new NE type to be developed, tested, approved and installed on the EMS. Furthermore, in order to install a new EMS software release version the EMS has to be taken offline which causes disruption to the network and therefore the embodiments of the present invention have the additional advantage that when integrating a new NE type into the EMS it can be done without affecting the operation and capabilities of the EMS.

While preferred embodiments of the invention have been shown and described, it will be understood that such embodiments are described by way of example only. Numerous variations, changes and substitutions will occur to those skilled in the art without departing from the scope of the present invention as defined by the appended claims.

## Claims

1. A method (Figure 3) for integrating a Network Element Type with an Element Management System comprising:
retrieving (303) a Network Element Type definition; and
integrating (310) said Network Element Type definition with said Element Management System,
**characterised in that** the method comprises:
checking (301) a licence to ensure that a Network Operator
is allowed to integrate said Network Element Type with the Element Management System;
retrieving (303) a Network Element Type Alarm definition; and
integrating (310) said Network Element Type Alarm definition with said Element Management System such that said Element Management System can support said Network Element Type once said Network Element Type definition and said Network Element Type Alarm definition have been integrated with said Element Management System.

2. The method (Figure 3) as claimed in claim 1 in which said step of retrieving (303) said Network Element Type definition comprises retrieving said Network Element Type definition from a database or filesystem on the Element Management System or from a database operatively connected to said Element Management System.

3. The method (Figure 3) as claimed in claim 1 or 2 in which said Network Element Type definition comprises a set of attributes and parameters that define said Network Element Type, wherein said step of integrating (310) said Network Element Type with said Element Management System comprises:
generating Structure Query Language statements based on said Network Element Type definition; and
executing said Structured Query Language statements to integrate said attributes and parameters that define said Network Element Type into at least one database on said Element Management System.

4. The method (Figure 3) as claimed in any one of the preceding claims in which said step of retrieving (303) said Network Element Type Alarm definition comprises retrieving a zip file, wherein said zip file comprises at least one file that defines at least TRAP mappings data and alarm catalogue data; and
said step of integrating (310) said Network Element type Alarm definition with said Element Management System comprises:
extracting said at least one file from said zip file;
updating said Element Management System according to data in said extracted at least one file.

5. The method (Figure 3) as claimed in claim 4 in which said step of updating said Element Management System comprises:
installing said TRAP mappings data to a directory on said Element Management System; and
installing said alarm catalogue data to a directory on said Element Management System.

6. The method (Figure 3) as claimed in any one of the preceding claims further comprising:
generating said Network Element Type Alarm definition; and
storing said Network Element Type Alarm definition in a directory on said Element Management System.

7. The method (Figure 3) as claimed in claim 6 in which said step of generating said Network Element Type Alarm definition comprises:
retrieving Management Information Base file;
generating Comma Separated Value file based on said Management Information Base file;
editing said Comma Separated Value file to include values for said Network Element Type;
generating a TRAP mapping data file based on said edited Comma Separated Value file; and
generating at least one alarm catalogue file based on said edited Comma Separated Value file.

8. A server (3) adapted to:
retrieve a Network Element Type definition;
integrate said Network Element Type definition with an Element Management System (3);
**characterised in that** the server is adapated to:
check a licence to ensure that a Network operator is allowed to integrate said Network Element Type with the Element Management System;
retrieve a Network Element Type Alarm definition; and
integrate said Network Element Type Alarm definition with said Element Management System such that said Element Management System can support said Network Element Type once said Network Element Type definition and said Network Element Type Alarm definition have been integrated with said Element Management System.

9. The server (3) as claimed in claim 8 in which said Network Element Type definition comprises a set of attributes and parameters that define said Network Element Type, wherein said server is further adapted to:
generate Structure Query Language statements based on said Network Element Type definition; and
execute said Structured Query Language statements to integrate said attributes and parameters that define said Network Element Type into at least one database on the Element Management System.

10. The server (3) as claimed in claim 8 or 9, in which in which said Network Element Type Alarm is a zip file, wherein said zip file comprises at least one file that defines at least TRAP mappings data and alarm catalogue data; and said server is further adapted to:
extract said at least one file from said zip file;
update said Element Management System according to data in said extracted at least one file.

11. The server (3) as claimed in claim 10 further adapted to:
install said TRAP mappings data to a directory on said Element Management System; and
install said alarm catalogue data to a directory on said Element Management System.

12. A computer program product comprising computer readable executable code for:
checking (301) a licence to ensure that a Network Operator is allowed to integrate said Network Element Type with an Element Management System;
retrieving (303) a Network Element Type definition;
retrieving (303) a Network Element Type Alarm definition;
integrating (310) said Network Element Type definition with said Element Management System; and
integrating (310) said Network Element Type Alarm definition with said Element Management System such that said Element Management System can support said Network Element Type once said Network Element Type definition and said Network Element Type Alarm definition have been integrated with said Element Management System.

13. The computer program product as claimed in claim 12 in which said Network Element Type definition comprises a set of attributes and parameters that define said Network Element Type, wherein said computer program product further comprises computer readable executable code for:
generating Structure Query Language statements based on said Network Element Type definition; and
executing said Structured Query Language statements to integrate said attributes and parameters that define said Network Element Type into at least one database on the Element Management System.

14. The server (3) as claimed in claim 12 or 13, in which in which said Network Element Type Alarm is a zip file, wherein said zip file comprises at least one file that defines at least TRAP mappings data and alarm catalogue data; and said computer program product further comprises computer readable executable code for:
extracting said at least one file from said zip file;
updating said Element Management System according to data in said extracted at least one file.

15. The computer program product as claimed in claim 14 further comprising computer readable executable code for:
installing said TRAP mappings data to a directory on said Element Management System; and
installing said alarm catalogue data to a directory on said Element Management System.

## Patentansprüche

1. Verfahren (Figur 3) zum Integrieren eines Netzwerkelementtyps in ein Element-Management-System, wobei das Verfahren Folgendes umfasst:
Abrufen (303) einer Netzwerkelementtyp-Definition; und
Integrieren (310) der Netzwerkelementtyp-Definition in das Element-Management-System,
**dadurch gekennzeichnet, dass** das Verfahren Folgendes umfasst:
Überprüfen (301) einer Lizenz, um sicherzustellen, dass es einem Netzwerkbediener gestattet wird, den Netzwerkelementtyp in das Element-Management-System zu integrieren;
Abrufen (303) einer Netzwerkelementtypalarm-Definition; und
Integrieren (310) der Netzwerkelementtypalarm-Definition in das Element-Management-System dergestalt, dass das Element-Management-System den Netzwerkelementtyp unterstützen kann, nachdem die Netzwerkelementtyp-Definition und die Netzwerkelementtypalarm-Definition in das Element-Management-System integriert wurden.

2. Verfahren (Figur 3) nach Anspruch 1, wobei der Schritt des Abrufens (303) der Netzwerkelementtyp-Definition das Abrufen der Netzwerkelementtyp-Definition aus einer Datenbank oder einem Dateisystem in dem Element-Management-System oder aus einer Datenbank, die mit dem Element-Management-System wirkverbunden ist, umfasst.

3. Verfahren (Figur 3) nach Anspruch 1 oder 2, wobei die Netzwerkelementtyp-Definition einen Satz Attribute und Parameter umfasst, die den Netzwerkelementtyp definieren, wobei der Schritt des Integrierens (310) des Netzwerkelementtyps in das Element-Management-System Folgendes umfasst:
Generieren von Structured-Query-Language-Statements auf der Grundlage der Netzwerkelementtyp-Definition; und
Ausführen der Structured-Query-Language-Statements, um die Attribute und Parameter, die den Netzwerkelementtyp definieren, in mindestens eine Datenbank in dem Element-Management-System zu integrieren.

4. Verfahren (Figur 3) nach einem der vorangehenden Ansprüche, wobei der Schritt des Abrufens (303) der Netzwerkelementtypalarm-Definition das Abrufen einer Zip-Datei umfasst, wobei die Zip-Datei mindestens eine Datei umfasst, die mindestens TRAP-Mapping-Daten und Alarmkatalogdaten definiert; und
der Schritt des Integrierens (310) der Netzwerkelementtypalarm-Definition in das Element-Management-System Folgendes umfasst:
Extrahieren der mindestens einen Datei aus der Zip-Datei; und
Aktualisieren des Element-Management-Systems gemäß Daten in der extrahierten mindestens einen Datei.

5. Verfahren (Figur 3) nach Anspruch 4, wobei der Schritt des Aktualisierens des Element-Management-Systems Folgendes umfasst:
Installieren der TRAP-Mapping-Daten in ein Verzeichnis in dem Element-Management-System; und
Installieren der Alarmkatalogdaten in ein Verzeichnis in dem Element-Management-System.

6. Verfahren (Figur 3) nach einem der vorangehenden Ansprüche, das des Weiteren Folgendes umfasst:
Generieren der Netzwerkelementtypalarm-Definition; und
Speichern der Netzwerkelementtypalarm-Definition in ein Verzeichnis in dem Element-Management-System.

7. Verfahren (Figur 3) nach Anspruch 6, wobei der Schritt des Erzeugens der Netzwerkelementtypalarm-Definition Folgendes umfasst:
Abrufen einer Management Information Base-Datei;
Generieren einer Comma Separated Value-Datei auf der Grundlage der Management Information Base-Datei;
Bearbeiten der Comma-Separated-Value-Datei dergestalt, dass Werte für den Netzwerkelementtyp darin aufgenommen werden;
Erzeugen einer TRAP-Mapping-Daten-Datei auf der Grundlage der bearbeiteten Comma-Separated-Value-Datei; und
Generieren mindestens einer Alarmkatalogdatei auf der Grundlage der bearbeiteten Comma Separated Value-Datei.

8. Server (3), der dafür ausgelegt ist:
eine Netzwerkelementtyp-Definition abzurufen; und
die Netzwerkelementtyp-Definition in ein Element-Management-System (3) zu integrieren;
**dadurch gekennzeichnet, dass** der Server für Folgendes ausgelegt ist:
Überprüfen einer Lizenz, um sicherzustellen, dass es einem Netzwerkbediener gestattet wird, den Netzwerkelementtyp in das Element-Management-System zu integrieren;
Abrufen einer Netzwerkelementtypalarm-Definition; und
Integrieren der Netzwerkelementtypalarm-Definition in das Element-Management-System dergestalt, dass das Element-Management-System den Netzwerkelementtyp unterstützen kann, nachdem die Netzwerkelementtyp-Definition und die Netzwerkelementtypalarm-Definition in das Element-Management-System integriert wurden.

9. Server (3) nach Anspruch 8, wobei die Netzwerkelementtyp-Definition einen Satz Attribute und Parameter umfasst, die den Netzwerkelementtyp definieren, wobei der Server des Weiteren dafür ausgelegt ist:
Structured Query Language-Statements auf der Grundlage der Netzwerkelementtyp-Definition zu erzeugen; und
die Structured Query Language-Statements auszuführen, um die Attribute und Parameter, die den Netzwerkelementtyp definieren, in mindestens eine Datenbank in dem Element-Management-System zu integrieren.

10. Server (3) nach Anspruch 8 oder 9, wobei der Netzwerkelementtyp-Alarm eine Zip-Datei ist, wobei die Zip-Datei mindestens eine Datei umfasst, die mindestens TRAP-Mapping-Daten und Alarmkatalogdaten definiert; und der Server des Weiteren dafür ausgelegt ist:
die mindestens eine Datei aus der Zip-Datei zu extrahieren; und
das Element-Management-System gemäß Daten in der extrahierten mindestens einen Datei zu aktualisieren.

11. Server (3) nach Anspruch 10, der des Weiteren dafür ausgelegt ist:
die TRAP-Mapping-Daten in ein Verzeichnis in dem Element-Management-System zu installieren; und
die Alarmkatalogdaten in ein Verzeichnis in dem Element-Management-System zu installieren.

12. Computerprogrammprodukt, das computerlesbaren, ausführbaren Code für folgende Aktionen umfasst:
Überprüfen (301) einer Lizenz, um sicherzustellen, dass es einem Netzwerkbediener gestattet wird, den Netzwerkelementtyp in das Element-Management-System zu integrieren;
Abrufen (303) einer Netzwerkelementtyp-Definition;
Abrufen (303) einer Netzwerkelementtypalarm-Definition;
Integrieren (310) der Netzwerkelementtyp-Definition in das Element-Management-System; und
Integrieren (310) der Netzwerkelementtypalarm-Definition in das Element-Management-System dergestalt, dass das Element-Management-System den Netzwerkelementtyp unterstützen kann, nachdem die Netzwerkelementtyp-Definition und die Netzwerkelementtypalarm-Definition in das Element-Management-System integriert wurden.

13. Computerprogrammprodukt nach Anspruch 12, wobei die Netzwerkelementtyp-Definition einen Satz Attribute und Parameter umfasst, die den Netzwerkelementtyp definieren, wobei das Computerprogrammprodukt des Weiteren computerlesbaren, ausführbaren Code für Folgendes umfasst:
Generieren von Structured Query Language-Statements auf der Grundlage der Netzwerkelementtyp-Definition; und
Ausführen der Structured Query Language-Statements, um die Attribute und Parameter, die den Netzwerkelementtyp definieren, in mindestens eine Datenbank in dem Element-Management-System zu integrieren.

14. Server (3) nach Anspruch 12 oder 13, wobei der Netzwerkelementtyp-Alarm eine Zip-Datei ist, wobei die Zip-Datei mindestens eine Datei umfasst, die mindestens TRAP-Mapping-Daten und Alarmkatalogdaten definiert; und wobei das Computerprogrammprodukt des Weiteren computerlesbaren, ausführbaren Code umfasst, um:
die mindestens eine Datei aus der Zip-Datei zu extrahieren; und
das Element-Management-System gemäß Daten in der extrahierten mindestens einen Datei zu aktualisieren.

15. Computerprogrammprodukt nach Anspruch 14, das des Weiteren computerlesbaren, ausführbaren Code umfasst, um:
die TRAP-Mapping-Daten in ein Verzeichnis in dem Element-Management-System zu installieren; und
die Alarmkatalogdaten in ein Verzeichnis in dem Element-Management-System zu installieren.

## Revendications

1. Un procédé (Figure 3) d'intégration d'un type d'élément de réseau à un système de gestion d'élément comprenant :
la récupération (303) d'une définition de type d'élément de réseau, et
l'intégration (310) de ladite définition de type d'élément de réseau audit système de gestion d'élément,
**caractérisé en ce que** le procédé comprend :
la vérification (301) d'une licence de façon à s'assurer qu'un opérateur de réseau soit autorisé à intégrer ledit type d'élément de réseau audit système de gestion d'élément,
la récupération (303) d'une définition d'alarme de type d'élément de réseau, et
l'intégration (310) de ladite définition d'alarme de type d'élément de réseau audit système de gestion d'élément de sorte que ledit système de gestion d'élément puisse prendre en charge ledit type d'élément de réseau une fois que ladite définition de type d'élément de réseau et ladite définition d'alarme de type d'élément de réseau ont été intégrées audit système de gestion d'élément.

2. Le procédé (Figure 3) selon la revendication 1 dans lequel ladite étape de récupération (303) de ladite définition de type d'élément de réseau comprend la récupération de ladite définition de type d'élément de réseau à partir d'une base de données ou d'un système de fichiers sur le système de gestion d'élément ou à partir d'une base de données reliée de manière opérationnelle audit système de gestion d'élément.

3. Le procédé (Figure 3) selon la revendication 1 ou 2 dans lequel ladite définition de type d'élément de réseau comprend un ensemble d'attributs et de paramètres qui définissent ledit type d'élément de réseau, ladite étape d'intégration (310) dudit type d'élément de réseau audit système de gestion d'élément comprenant :
la génération d'instructions de langage d'interrogation structuré en fonction de ladite définition de type d'élément de réseau, et
l'exécution desdites instructions de langage d'interrogation structuré de façon à intégrer lesdits attributs et paramètres qui définissent ledit type d'élément de réseau à au moins une base de données sur ledit système de gestion d'élément.

4. Le procédé (Figure 3) selon l'une quelconque des revendications précédentes dans lequel ladite étape de récupération (303) de ladite définition d'alarme de type d'élément de réseau comprend la récupération d'un fichier compressé, ledit fichier compressé comprenant au moins un fichier qui définit au moins des données de mappages TRAP et des données de catalogue d'alarmes, et
ladite étape d'intégration (310) de ladite définition d'alarme de type d'élément de réseau audit système de gestion d'élément comprend :
l'extraction dudit au moins un fichier dudit fichier compressé,
l'actualisation dudit système de gestion d'élément selon des données dans ledit au moins un fichier extrait.

5. Le procédé (Figure 3) selon la revendication 4 dans lequel ladite étape d'actualisation dudit système de gestion d'élément comprend :
l'installation desdites données de mappages TRAP dans un répertoire sur ledit système de gestion d'élément, et
l'installation desdites données de catalogue d'alarmes dans un répertoire sur ledit système de gestion d'élément.

6. Le procédé (Figure 3) selon l'une quelconque des revendications précédentes comprenant en outre :
la génération de ladite définition d'alarme de type d'élément de réseau, et
la conservation en mémoire de ladite définition d'alarme de type d'élément de réseau dans un répertoire sur ledit système de gestion d'élément.

7. Le procédé (Figure 3) selon la revendication 6 dans lequel ladite étape de génération de ladite définition d'alarme de type d'élément de réseau comprend :
la récupération d'un fichier de base d'informations de gestion,
la génération d'un fichier de valeurs séparées par une virgule en fonction dudit fichier de base d'informations de gestion,
l'édition dudit fichier de valeurs séparées par une virgule de façon à inclure des valeurs pour ledit type d'élément de réseau,
la génération d'un fichier de données de mappage TRAP en fonction dudit fichier édité de valeurs séparées par une virgule, et
la génération d'au moins un fichier de catalogue d'alarmes en fonction dudit fichier édité de valeurs séparées par une virgule.

8. Un serveur (3) adapté de façon à :
récupérer une définition de type d'élément de réseau,
intégrer ladite définition de type d'élément de réseau à un système de gestion d'élément (3),
**caractérisé en ce que** le serveur est adapté de façon à :
vérifier une licence de façon à s'assurer qu'un opérateur de réseau est autorisé à intégrer ledit type d'élément de réseau audit système de gestion d'élément,
récupérer une définition d'alarme de type d'élément de réseau, et
intégrer ladite définition d'alarme de type d'élément de réseau audit système de gestion d'élément de sorte que ledit système de gestion d'élément puisse prendre en charge ledit type d'élément de réseau une fois que ladite définition de type d'élément de réseau et ladite définition d'alarme de type d'élément de réseau ont été intégrées audit système de gestion d'élément.

9. Le serveur (3) selon la revendication 8 dans lequel ladite définition de type d'élément de réseau comprend un ensemble d'attributs et de paramètres qui définissent ledit type d'élément de réseau, ledit serveur étant adapté en outre de façon à :
générer des instructions de langage d'interrogation structuré en fonction de ladite définition de type d'élément de réseau, et
exécuter lesdites instructions de langage d'interrogation structuré de façon à intégrer lesdits attributs et paramètres qui définissent ledit type d'élément de réseau à au moins une base de données sur le système de gestion d'élément.

10. Le serveur (3) selon la revendication 8 ou 9, dans lequel ladite alarme de type d'élément de réseau est un fichier compressé, ledit fichier compressé comprenant au moins un fichier qui définit au moins des données de mappages TRAP et des données de catalogue d'alarmes, et ledit serveur est adapté en outre de façon à :
extraire ledit au moins un fichier dudit fichier compressé,
actualiser ledit système de gestion d'élément selon des données dans ledit au moins un fichier extrait.

11. Le serveur (3) selon la revendication 10 adapté en outre de façon à :
installer lesdites données de mappages TRAP dans un répertoire sur ledit système de gestion d'élément, et
installer lesdites données de catalogue d'alarmes dans un répertoire sur ledit système de gestion d'élément.

12. Un produit de programme informatique comprenant du code exécutable lisible par ordinateur destiné à :
la vérification (301) d'une licence de façon à s'assurer qu'un opérateur de réseau soit autorisé à intégrer ledit type d'élément de réseau à un système de gestion d'élément,
la récupération (303) d'une définition de type d'élément de réseau,
la récupération (303) d'une définition d'alarme de type d'élément de réseau,
l'intégration (310) de ladite définition de type d'élément de réseau audit système de gestion d'élément, et
l'intégration (310) de ladite définition d'alarme de type d'élément de réseau audit système de gestion d'élément de sorte que ledit système de gestion d'élément puisse prendre en charge ledit type d'élément de réseau une fois que ladite définition de type d'élément de réseau et ladite définition d'alarme de type d'élément de réseau ont été intégrées audit système de gestion d'élément.

13. Le produit de programme informatique selon la revendication 12 dans lequel ladite définition de type d'élément de réseau comprend un ensemble d'attributs et de paramètres qui définissent ledit type d'élément de réseau, ledit produit de programme informatique comprenant en outre du code exécutable lisible par ordinateur destiné à :
la génération d'instructions de langage d'interrogation structuré en fonction de ladite définition de type d'élément de réseau, et
l'exécution desdites instructions de langage d'interrogation structuré de façon à intégrer lesdits attributs et paramètres qui définissent ledit type d'élément de réseau à au moins une base de données sur le système de gestion d'élément.

14. Le serveur (3) selon la revendication 12 ou 13, dans lequel ladite alarme de type d'élément de réseau est un fichier compressé, ledit fichier compressé comprenant au moins un fichier qui définit au moins des données de mappages TRAP et des données de catalogue d'alarmes, et ledit produit de programme informatique comprenant en outre du code exécutable lisible par ordinateur destiné à :
l'extraction dudit au moins un fichier dudit fichier compressé,
l'actualisation dudit système de gestion d'élément selon des données dans ledit au moins un fichier extrait.

15. Le produit de programme informatique selon la revendication 14 comprenant en outre du code exécutable lisible par ordinateur destiné à :
l'installation desdites données de mappages TRAP dans un répertoire sur ledit système de gestion d'élément, et
l'installation desdites données de catalogue d'alarmes dans un répertoire sur ledit système de gestion d'élément.
